# EUROPÄISCHE PATENTSCHRIFT

(11) **EP 1 051 372 B1**
(45) Veröffentlichungstag und Bekanntmachung des Hinweises auf die Patenterteilung: **02.05.2002**
(21) Anmeldenummer: 99910114.0
(22) Anmeldetag: 03.02.1999
(51) Int. Cl.: C05F 17/00, C05F 17/02

(54) **VERFAHREN UND VORRICHTUNG ZUR TROCKNUNG VON ORGANISCHEN ABFÄLLEN**
METHOD AND DEVICE FOR DRYING ORGANIC WASTE
PROCEDE ET DISPOSITIF POUR SECHER DES DECHETS ORGANIQUES

(30) Priorität: 07.02.1998 DE 19804949
(43) Veröffentlichungstag der Anmeldung: 15.11.2000
(73) Patentinhaber: Lurgi Energie und Entsorgung GmbH, 40880 Ratingen (DE)
(72) Erfinder: VOLLMER, Friedel, D-44652 Herne (DE); DOLLE, Lothar, D-44627 Herne (DE); LISTRINGHAUS, Walter, D-58809 Neuenrade (DE); PLATEN, Elmar, D-40670 Meerbusch-Strümp (DE)
(74) Vertreter: Vomberg, Friedhelm, Dipl.-Phys.
(86) Internationale Anmeldenummer: DE9900333
(87) Internationale Veröffentlichungsnummer: WO9940045

(56) Entgegenhaltungen:
- EP-A- 0 623 572
- EP-A- 0 691 316
- WO-A-96/07624
- DE-A- 19 547 062

## Beschreibung

Die Erfindung betrifft ein Verfahren zur Trocknung von organischen Abfällen, die zwei zeitlich aufeinanderfolgenden Trocknungsstufen unterworfen werden, wobei die Abfälle in einer ersten Stufe belüftet und hierdurch gleichzeitig teilentwässert werden und die bei der durch die Belüftung gestützte aerobe Verrottung entstehende Prozeßwärme in der zweiten Stufe zur Resttrocknung ausgenutzt wird.

Die Erfindung betrifft ferner eine Vorrichtung mit in unterschiedlichen miteinander verbundenen oder voneinander getrennten geschlossenen Räumen jeweils vorgesehenen Belüftungseinrichtungen und mit einer Abluftleitung des ersten Raumes, in der ein Wärmetauscher angeordnet ist, der mit einer Wärmepumpe verbunden ist, die mit einem Wärmetauscher in der Zuluftleitung für den zweiten Raum in Verbindung stehen.

Ein Verfahren und eine Vorrichtung der vorgenannten Art sind in der WO 97/22842 beschrieben. Wie bereits dort erwähnt wird, verfolgt die Trocknung von organischen Abfällen den Zweck, diese Abfälle in einen Status zu überführen, in dem der biologische Abbau drastisch reduziert und im Idealfall völlig zum Erliegen gekommen ist, so daß eine emissionsarme Lagerung mit der Möglichkeit der späteren Verbrennung oder eine unmittelbare Verbrennung unter Ausnutzung der Heizwerte des getrockneten Abfalles durchgeführt werden kann. In der Bioabfallkompostierung kann davon ausgegangen werden, daß unter 25 Massen-% Wassergehalt die biologische Aktivität drastisch reduziert ist und daß bei Restfeuchtigkeitsgehalten von 15 % oder weniger eine sogenannte biologische Starre eintritt. Nach der WO 97/22842 werden die organischen Abfälle zwei zeitlich aufeinanderfolgenden Trocknungsstufen unterworfen, wobei die Abfälle in einer ersten Stufe lediglich belüftet und durch diese Belüftung gleichzeitig teilentwässert werden. Hierbei verrottet das Abfallmaterial in bekannter Weise, wobei die Abfall- bzw. Rottetemperatur auf Werte von bis zu 70°C ansteigt und auf diesem Temperaturniveau bei dauernder Belüftung zur Stützung der mikrobiellen Aktivität eine Zeit lang verbleibt, bevor die Rottetemperatur allmählich wieder absinkt. Bei dem Belüften in der ersten Stufe wird der Feuchtigkeitsgehalt des die Rotte bildenden organischen Abfalles gesenkt, wobei die bei der Verrottung entstehende Prozeßwärme in der zweiten Stufe zur Resttrocknung des organischen Abfalles auf die gewünschte maximale Restfeuchte ausgenutzt wird.

Das beschriebene Verfahren arbeitet in der Weise, daß sowohl der ersten (Rotte-)Stufe als auch der zweiten(Trocknungs-)Stufe von außen oder aus einer Halle, in der unbehandelte und/oder bereits getrocknete Abfälle lagern, Luft angesogen und über separate Zuluftversorgungen in die erste und die zweite Stufe eingeblasen wird. Die Abluft der ersten Stufe sowie die Abluft der zweiten Stufe wird dann einem Biofilter zugeleitet. In entsprechender Weise sind die Zuluftleitungen und die Abluftleitungen zu dimensionieren. Abgesehen von den Transporteinrichtungen (Gebläse) für die Luft, muß auch die abschließende Abgasreinigungsanlage, z.B. ein Biofilter, für die in der ersten und in der zweiten Stufe anfallenden Luftmengen ausgestattet sein.

Die EP 0 623 572 A1 betrifft eine Rottehalle mit flexibler Führung und Konditionierung von Luftströmen, die insbesondere bei Großkompostierungsanlagen Anwendung finden soll. Um eine energiesparende und umweltfreundliche Be- und Entlüftung der Rottehalle zu ermöglichen, soll diese in Feldbereiche für den Eintrag, die Intensivzone und die Nachrotte unterteilt sein. Die Feldbereiche der Intensivrotte sind durch Klappen von den übrigen Feldbereichen getrennt. In der Intensivzone erfolgt eine Druckbelüftung, in den Feldbereichen der Nachrotte eine Saugbelüftung. Die genannten Klappen sind so in der Hallendachkonstruktion angeordnet, daß sie beim Umsetzen des Rottegutes in Richtung der Feldbereiche schwenkbar sind. Der motorische Schwenkantrieb ist hierzu mit der Bewegung einer Umsetzmaschine verbunden. Nach Bedarf kann die Abluft der Intensivzone im Umluftverfahren zurückgeführt werden. Das Abluftsystem der Intensivzone sowie der Nachrottezone ist so ausgelegt, daß ständig ein Unterdruck herrscht. Es soll möglichst wenig Frischluft verwendet werden, weshalb die Umluftführung mit Nutzung der Abluft aus dem Anlieferungsbereich und der Aufbereitung gewählt wird. Gegenüber der Frischluft soll ein Mehrfaches an Abluft umgewälzt werden. Die kontaminierte Abluft soll in einem Wärmetauscher gekühlt werden, um die optimale Temperatur eines nachgeschalteten Biofilters zu erreichen. Die Abwärme der Abluft soll der Vorheizung kühlerer Luftströme dienen oder in weiteren Wirkkreisen Verwendung finden.

Es ist Aufgabe der vorliegenden Erfindung, ohne Beeinträchtigung der Zielsetzung, in möglichst kurzer Zeit unter optimaler Energieeinsparung das eingangs genannte Verfahren sowie die hierfür geeignete Vorrichtung derart weiterzubilden, daß die durch die Abluftmenge bestimmten Emissionen gesenkt werden können und/oder die Menge der zu transportierenden Luft minimiert wird.

Diese Aufgabe wird verfahrenstechnisch durch die im Anspruch 1 beschriebenen Maßnahmen gelöst, die erfindungsgemäß dadurch gekennzeichnet sind, daß die gesamte der ersten Stufe zugeführte Luftmenge aus der Abluft der zweiten Stufe entnommen wird. Durch diese Maßnahme wird erreicht, daß eine erheblich geringere Menge an Außenluft oder Luft aus einer Halle angesaugt werden muß. Der ersten Stufe wird somit überhaupt keine Außenluft mehr zugeführt, sondern nur die Abluft der zweiten Stufe oder ein Teil davon. Entsprechend der geringeren angesaugten Luftmenge entfallen auch Konditionierungsmaßnahmen, wie insbesondere eine Luftentstaubung.

Nach einer Weiterbildung der Erfindung und zur weiteren Minimierung der anzusaugenden Außen-Luftmenge ist vorgesehen, daß ein Teil der Abluft der zweiten Stufe einer Entfeuchtung unterzogen und diese entfeuchtete Luftmenge wieder der Trocknungsstufe zugeführt wird. Das heißt, ein Teil der Abluft der Trocknungsstufe durchläuft rezirkulierend diese Stufe. Wird die Belüftung der ersten Stufe ausschließlich mit der aus der Abluft der zweiten Stufe entnommenen Teilmenge durchgeführt, bedeutet dies, daß nur soviel Frischluft zugeführt werden muß, wie zur Belüftung der ersten Stufe, in der der Rotteprozeß ablaufen soll, benötigt wird. Da in der Trocknungsstufe eine erheblich größere Luftmenge benötigt wird, bedeutet dies, daß die von außen angesaugte Luftmenge gegenüber dem eingangs genannten Stand der Technik auf bis zu 30 % reduziert werden kann.

In einem konkreten Ausführungsbeispiel werden der Trocknungsstufe 22000 m³/h an Frischluft zugeführt, weitere 22000 m³/h laufen rezirkulierend durch die Trocknungsstufe, so daß sich eine vereinigte Gesamtmenge an Luft, die der Belüftungseinrichtung der Trocknungsstufe zugeführt wird, von 44000 m³/h ergibt. Von diesen 44000 m³/h, die auch als Abluftmenge anfallen, werden 22000 m³/h als Zuluft für die erste Stufe abgezweigt, während die andere Hälfte (22000 m³/h) wie bereits erwähnt, rezirkulierend die Trocknungsstufe durchläuft. Da die die Trocknungsstufe durchlaufende Luft Feuchtigkeit aufnimmt, werden zweckmäßigerweise sowohl die zur ersten Stufe abgezweigte Luftmenge als auch die rezirkulierend umlaufende Luftmenge vor dem jeweiligen Eintritt in die erste bzw. zweite Stufe entfeuchtet. Falls erforderlich und je nach Herkunft der Luft wird die Zuluft in die zweite Stufe vor ihrer Zuführung entstaubt.

Die größte Energieeinsparung bzw. Minimierung der Zuluftmenge erhält man jedoch, wenn ausschließlich der zweiten Stufe erwärmte, von außen angesogene Frischluft in der Menge zugeführt wird, wie Abluft aus der zweiten Stufe zur Belüftung der ersten Stufe abgezweigt wird. Diese Abluft durchläuft dann die erste Stufe, von wo aus sie als Abluft anfällt. Anders ausgedrückt, die Zuluftmenge wird bei dieser Verfahrenstechnik durch die Menge bestimmt, die in der ersten Stufe zur Belüftung des Rotteprozeßes benötigt wird. Der Luftdurchsatz durch die Abfälle in der ersten Stufe wird vorteilhafterweise in Abhängigkeit der Rottematerialtemperatur, der Rottefeuchtigkeit, des CO₂-Gehaltes gesteuert, der in der Abluft der ersten Stufe gemessen wird. Diese Steuerung dient dazu, die biologische Aktivität, d.h. die Verrottung, zu optimieren. Die Rottematerialtemperatur sowie die Rottefeuchtigkeit können durch Meßlanzen, aber auch indirekt durch Meßfühler in der Abluft bestimmt werden.

Vorzugsweise werden die Abfälle in einem geschlossenen Raum, der auch ein Behälter sein kann, mit Außenluft durchströmt, die hierbei sowohl Feuchtigkeit als auch die Prozeßwärme (der ersten Stufe) aufnimmt, wobei die mittels eines Wärmetauschers der Abluft der ersten Stufe entnommenen Prozeßwärme unter Zuhilfenahme einer Wärmepumpe auf ein höheres Temperaturniveau gebracht und einem zweiten Wärmetauscher zugeführt wird, der die Zuluft, die durch die Abfälle in der zweiten Stufe geleitet wird, vorher erwärmt. Diese Zuluft setzt sich aus der Frischluft und der rezirkulierend geführten Luftmenge der zweiten Stufe zusammen, wobei die rezirkulierend geführte Luft der zweiten Stufe entfeuchtet wird (z.B. mittels einer Kühlfalle), bevor sie dem Wärmetauscher zur Wiedererwärmung zum Zwecke der Belüftung der zweiten Stufe zugeführt wird.

Vorzugsweise wird in der ersten Stufe durch gesteuerte Belüftung der organischen Abfälle eine Vortrocknung auf ein Restfeuchtegehalt der Abfälle von 30 bis 28 Massen-% durchgeführt. Bei Reduzierung der Feuchte auf diese Gehalte kann kein biologischer Abbau mehr stattfinden, d.h., die Rottetemperatur sinkt auf Werte von 40 bis 45°C ab. Zu diesem Zeitpunkt wird das Abfallmaterial von der ersten Stufe in die zweite Stufe überführt, wo die Resttrocknung auf Restfeuchten von weniger als 15 Massen-% mittels erwärmter, durchströmt:er Luft vorgenommen wird.

Nach einer Weiterbildung des erfindungsgemäßen Verfahrens werden die Abfälle durch einen einzigen geschlossenen Raum kontinuierlich oder diskontinuierlich vorwärtsbewegt, in dessen erstem Teil die Abfälle mit von außen zugeführter Luft durchströmt und in dessen zweitem Teil, den die Abfälle durch die Vorwärtsbewegung zeitlich später erreichen, von außen zugeführte Luft erwärmt und durch die kontinuierlich oder diskontinuierlich weiterbewegten Abfälle geführt bzw. geblasen wird. Zumindest in der ersten Stufe wird die Luft vorzugsweise derart eingeblasen, daß sie die aufgeschichteten organischen Abfälle von unten nach oben durchströmt. Da in der ersten Stufe durch die Verrottung Prozeßwärme entsteht, die nach oben entweicht, wird mit einer Luftströmung von unten nach oben eine Art Gleichstromprinzip realisiert. In der zweiten Stufe, bei der der Verrottungsvorgang beendet ist, kann die Strömungsrichtung der vorgewärmten Luft beliebig gewählt werden, jedoch wird auch hier vorzugsweise ein Luftstrom gewählt, der das aufgeschichtete Rottematerial von unten nach oben durchströmt. Vorzugsweise wird die Luft in der ersten und/oder der zweiten Stufe als Druckluft eingeblasen.

Nach einer weiteren Ausgestaltung wird die erste Stufe über eine Zeit von 5 bis 15 Tagen, vorzugsweise 5 Tagen, und die zweite Stufe über eine Zeit von 4 bis 6 Tagen, vorzugsweise 5 Tagen, durchgeführt. Somit ergibt sich im optimalen Fall eine Abfallbehandlungszeit, bei der der Abfall im Endzustand Feuchtigkeitsgehalte ≤15 Massen-% aufweist, von 9 bis 10 Tagen. Längere Behandlungszeiten hängen im wesentlichen von der Ausgangsfeuchte der organischen Materialien, dem Luftdurchsatz und anderen Prozeßführungsbedingungen ab. Weiterhin vorzugsweise wird die Luft für die zweite Stufe demselben Reservoir entnommen, im einfachsten Fall der Außenluft. Nach einer besonderen Ausgestaltung der Erfindung wird jedoch die Luft verwendet, die als Abluft einer Halle entnommen wird, in der unbehandelte und/oder bereits getrocknete Abfälle und/oder einer Rotte unterzogenen Abfälle lagern. Hierbei kann ggf. die höhere Temperatur dort entnommener Luft ausgenutzt werden.

Die der ersten Stufe entnommene Luft, d.h. die Abluft, wird einem Biofilter und/oder einem Biowäscher zugeführt, die bevorzugt in kompakter Bauweise als Filter angelegt sind, insbesondere eine bis zu drei Meter hohe Schüttung aus gerissenem Wurzelholz besitzen. Dieses Filtermaterial wird zur Erhöhung der Wirksamkeit jeweils befeuchtet. Die den Filter durchlaufende Abluft wird über einen Kamin an die Außenumgebung abgegeben.

Die Dauer der ersten Stufe wird vorzugsweise durch das zeitliche Temperaturprofil der Abfälle bestimmt, und zwar derart, daß die erste Stufe mindestens so lange durchgeführt wird, wie die Abfall-(Rotte-)Temperatur einen Wert von bis zu 70°C nicht unterschreitet und maximal so lange, bis die Rottetemperatur auf Werte um 45°C abgesunken ist. Die minimale Dauer der ersten Stufe soll somit zur Ausnutzung der Prozeßwärme dienen, die bei Rottetemperaturen von bis zu 70°C entsteht. Maximal ist die erste Stufe so lange durchzuführen, bis die Verrottung zumindest weitgehend zum Erliegen gekommen ist, was bei Rottetemperaturen von 45°C der Fall ist. Da in der ersten Stufe - anders als bei nach dem Stand der Technik bekannten Kompostierungsverfahren - keine Feuchtigkeit zugeführt wird, geht die sinkende Rottetemperatur auch mit einer Absenkung des Rottefeuchtigkeitsgehaltes einher.

Apparativ wird die Aufgabe mit der Vorrichtung nach Anspruch 7 gelöst.

Erfindungsgemäß ist bei dieser Vorrichtung mindestens ein Teil, vorzugsweise die gesamte Belüftungseinrichtung des ersten Raumes mit der Abluftleitung des zweiten Raumes verbunden.

Nach einer Weiterbildung der Erfindung zweigt aus der Abluftleitung des zweiten Raumes eine zweite Leitung ab, die eine Entfeuchtungseinrichtung aufweist und die mit den Belüftungseinrichtungen der zweiten Stufe oder deren Luftzufuhrsystem verbunden ist.

Schließlich ist nach einer weiteren Ausgestaltung der Erfindung eine Steuer- oder Regeleinrichtung in der Abluftleitung der zweiten Stufe vorgesehen, mittels der der Anteil der in die erste Stufe und/oder in die zweite Stufe geleiteten (Teil-)Luftmenge veränderbar ist. Diese Steuer- und Regeleinrichtung berücksichtigt insbesondere die Temperatur sowie die Feuchtigkeit der Außenluft, die als (frische) Zuluft der Trocknungsstufe zugeführt werden soll. Insbesondere läßt sich durch diese Steuer- oder Regeleinrichtung der rezirkulierend durch die Trocknungsstufe geführte Luftanteil variieren.

Die Belüftungseinrichtungen des ersten und/oder des zweiten Raumes bestehen vorzugsweise aus einem unterhalb einer Sohle der zu einem Haufwerk aufgeschichteten Abfälle angeordneten Druckluftgebläse und einer oberhalb des Haufwerkes liegenden Luftabzugsleitung, die ggf. ein Sauggebläse aufweist.

Nach einer weiteren Ausgestaltung der Erfindung ist das Druckluftgebläse mit einer Regelschaltung für die Regelung der Luftförderleistung in Abhängigkeit von durch Meßfühlern gemessene CO₂-Feuchtigkeits- oder Temperaturwerten der Rotte verbunden. Betreffende Meßfühler sind bevorzugt in der Abluftleitung der ersten Stufe angeordnet.

Nach einer Ausgestaltung der Erfindung wird das zweistufige Verfahren in einer einzigen Halle, vorzugsweise einem Rottetunnel durchgeführt. Diese besitzt Schubböden als Fördermittel für die Abfälle, mittels derer die Abfälle vom Eintritts- zum Austrittsende kontinuierlich oder quasi kontinuierlich bewegbar sind. Die Halle bzw. der Rottetunnel bildet zwei miteinander verbundene Räume, wobei in dem ersten Rottetunnelteil das Rottematerial (die Abfälle) aerob behandelt und hierbei vorgetrocknet und in dem zweiten Rottetunnelteil die weitergeförderte Rotte mittels erwärmter Luft auf den Restfeuchtegehalt ≤15 Massen-% getrocknet wird. Unter Schubböden wird eine Anordnung verstanden, bei der die gesamte Fläche in gleitend gelagerte Längsbalken aufgeteilt ist, die in mehreren, beispielsweise drei Gruppen unabhängig voneinander hydraulisch vorwärtsund zurückbewegt werden können. Durch gleichzeitige Bewegung aller Schubbalken wird das darauf liegende Material vorwärtstransportiert. Während der Rücklaufphase werden dagegen die Balken in beispielsweise drei Gruppen nacheinander unter dem Material zurückgezogen. Aufgrund der geringeren Reibung nimmt das Material die Rückbewegung der einzelnen Balkengruppen nicht auf, es verharrt also in der vorgeschobenen Position auf dem jeweils ruhenden Balken. Die Längsbalken eines Schubbodens bestehen vorzugsweise aus Edelstahlprofilen, die auf Kunststoffgleitlagern geführt und gegeneinander abgedichtet sind. Hierbei sind Flächenlasten von 5 Mg/m² erreichbar.

Nach einer weiteren Ausgestaltung der Erfindung mündet die Abluftleitung des ersten Raumes in einen Biofilter und/oder Biowäscher. Unterhalb der Sohle können Sicken vorgesehen sein, in denen das Prozeßwasser aufgefangen und einem Sammelbehälter zugeführt wird.

Das erfindungsgemäße Verfahren und die beschriebene Vorrichtung sind prinzipiell zur Behandlung jeglicher organischer Abfälle geeignet, worunter kommunale Abfälle, wie Hausmüll, dem Hausmüll ähnlicher Gewerbemüll, landwirtschaftliche Abfälle, Klärschlämme etc. und beliebige Mischungen aus den vorgenannten Stoffen zu verstehen sind. Etwa im Abfall enthaltene Störstoffe, wie Steine, Beton, Metallteile, Kunststoffe, Reifen, Textilien oder auch Batterien, Chemikalien, Teerpappen sowie biologische Störstoffe werden ggf. vorher aussortiert.

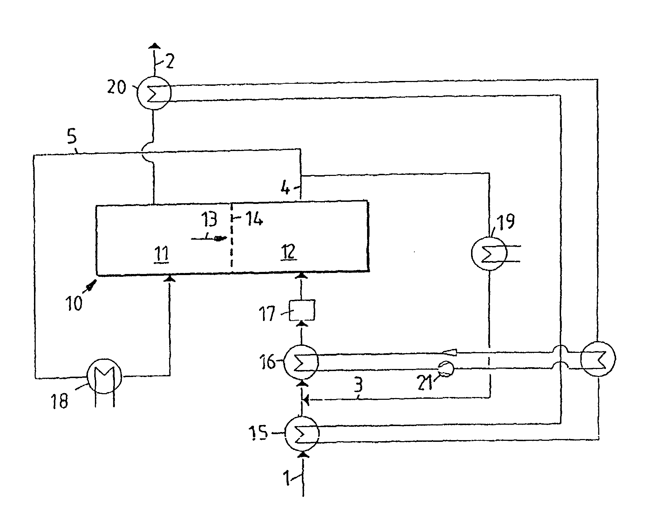

Ein Ausführungsbeispiel der Erfindung ist in der Zeichnung dargestellt, die eine Prinzipskizze der Luftführung nach der vorliegenden Erfindung zeigt.

Die im folgenden beschriebene mechanisch-biologische Abfallbehandlung von Müll dient der Reduzierung der zu deponierenden oder zu verbrennenden Abfallmengen und entspricht somit der umweltpolitischen Zielsetzung, einen möglichst hohen Anteil des Abfallaufkommens in den Wirtschaft- bzw. Naturkreislauf zurückzuführen. Im wesentlichen wird der von Störstoffen befreite Hausmüll oder hausmüllähnlicher Gewerbemüll behandelt, der als organischer Abfall angenommen, aufbereitet und als Stabilat gelagert oder einer Verbrennung zugeführt wird. Das aus dem Verfahren entnommene Endprodukt kann beispielsweise zu Rundballen gepreßt werden, die einer Verbrennungsanlage zugeführt werden.

Die anliefernden Fahrzeuge kippen den Abfall auf den dafür vorgesehenen Flachbunker in der Annahmehalle ab. In dieser geschlossenen Annahmehalle befindet sich ein Aufgabegutförderer, der mit einem Radlager beschickt wird. Etwaige im Abfall enthaltene Störstoffe werden aussortiert und in bereitgestellt Container gegeben. Der Aufgabegutförderer gibt das aufgegebene Gut in eine Siebtrommel, wobei ein Siebschnitt erfolgt. Der erhaltene Siebdurchlauf wird über verschiedene Förderbänder weitertransportiert, wobei oberhalb der Förderbänder Magnetabscheider zur Separation ferromagnetischer Bestandteile verwendet werden. Neben entsprechenden Arbeitsflächen der Annahmehalle können auch noch weitere Hallen, wie die Aufbereitungsund Intensivrottehalle oder eine Halle zur Lagerung des Stabilates bzw. zur sonstigen Aufbereitung vorgesehen sein können. Die betreffende Abluft aus der Annahmehalle, der Aufbereitungsund Intensivrottehalle sowie der Stabilataufbereitungshalle wird abgesaugt und über ein entsprechendes Luftverteilungssystem wie folgt zugeführt:

Der zu behandelnde Abfall durchläuft einen Rottetunnel 10 mit einem ersten Raum 11 und einem zweiten Raum 12 in Richtung des dargestellten Pfeiles 13. Der aus einer Annahmehalle über Förderbänder geförderte Abfall wird in den ersten Rottetunnelteil 11 gefüllt, wobei die Füllung über eine dort vorgesehene Schüttöffnung vorgenommen wird. Der Transport des Abfalles erfolgt mittels Schubböden, die das Material schrittweise von der Aufgabestelle (linker Bereich des ersten Raumes 11) zur Austrittsstelle (rechter Bereich des zweiten Raumes 12) befördern. Das der erfindungsgemäßen Vorrichtung unterzogene Material verläßt den Rottetunnel 10 als Stabilat mit einem auf 15 Massen-% verminderten Feuchtegehalt. Während der Vorwärtsbewegung wird das gesamte auf der Oberfläche liegende Material vom Schubboden transportiert. Im Bodenbereich, d.h. an der Sohle des Reaktortunnels 10, sind Lüftungsrohre vorhanden, die über entsprechende Belüftungsgeräte eine intensive Dauerbelüftung darstellen, die im Bereich 11 eine intensive aerobe Rotte bewirkt, bei der die organische Substanz abgebaut wird. Solange das Rottematerial sich im Bereich 11 befindet, der permanent und gleichmäßig von unten belüftet wird, sinkt der Wassergehalt der Rotte auf etwa 28 Massen-% ab, diesen Wassergehalt besitzt das Material etwa im Bereich der gestrichelten Linie 14.

Eine Zuluftmenge 1, die genauso groß ist wie die Abluftmenge 2, welche die erste Stufe (ersten Raum 11) verläßt, wird, ggf. nach Entstaubung, über Wärmetauscher 15, 16 erwärmt, wobei eine Luftmenge 3, die den Bereich der Trocknung 12 rezirkulierend durchläuft, mit der Luftmenge 1 vereinigt wird. Ggf. kann auch noch eine elektrische Heizung 17 vorgesehen sein, die im Bedarfsfall, insbesondere bei extrem kalten Außenlufttemperaturen, zugeschaltet werden kann. Die Luftmengen 1 und 3 werden über nicht dargestellte Belüftungseinrichtungen bodenseitig dem Raum 12 zugeführt, in dem die Trocknung von einem Feuchtegehalt von 28 Massen-% auf 15 Massen-% vorgenommen wird. Während des Durchlaufes nehmen die vereinigten Luftmengen 1 und 3 Feuchtigkeit auf. Die den zweiten Raum 12 verlassende, feuchtigkeitsbeladene Luftmenge 4 wird in Luftmengen 5 und 3 aufgeteilt, die jeweils Entfeuchtungseinrichtungen 18, 19, z.B. Kühlfallen, durchlaufen. Die Luftmenge 5 wird nach Entfeuchtung unmittelbar den Belüftungseinrichtungen des ersten Raumes 11 zugeführt, worüber sie nach Durchströmen der aufgegebenen Rotte den Reaktortunnel 10 als Abluftmenge 2 verläßt. Wegen der biologischen Aktivität der Rotte im ersten Raum, in dem die Rotte bis zu 70°C erreicht, erwärmt sich die Luft, so daß die Prozeßwärme über einen Wärmetauscher 20 entnommen werden kann. Dieser Wärmetauscher 20 steht mit den Wärmetauschern 15 und 16 in Verbindung, wobei zur optimalen Energieausnutzung eine Wärmepumpe 21 die vorhandene Energie auf ein höheres und damit nutzbares Temperaturniveau bringt.

Die Rotte durchläuft den ersten Raum 11 in etwa fünf Tagen, wonach sich weitere fünf Tage zur Trocknung (Durchlaufen des Raumes 12) anschließen.

## Patentansprüche

1. Verfahren zur Trocknung von organischen Abfällen, die zwei zeitlich aufeinanderfolgenden Trocknungsstufen unterworfen werden, wobei die Abfälle in einer ersten Stufe belüftet und hierdurch gleichzeitig teilentwässert werden und die bei der durch die Belüftung gestützten aeroben Verrottung entstehende Prozeßwärme in der zweiten Stufe zur Resttrocknung ausgenutzt wird,
**dadurch gekennzeichnet,**
**daß** die gesamte der ersten Stufe zugeführte Luftmenge (5), aus der Abluft (4) der zweiten Stufe entnommen wird.

2. Verfahren nach Anspruch 1, **dadurch gekennzeichnet, daß** ein Teil der Abluft (4) der zweiten Stufe einer Entfeuchtung unterzogen und diese entfeuchtete Luftmenge (3) wieder der Trocknungsstufe zugeführt wird, wobei vorzugsweise der Anteil der wieder der Trocknungsstufe zugeführten Abluft (3) bezogen auf die Gesamtabluftmenge (4) der Trocknungsstufe bis zu 70 % beträgt und/oder die aus der Abluft (4) der Trocknungsstufe entnommene Luftmenge (5) vor ihrer Zuführung in die erste Stufe entfeuchtet wird.

3. Verfahren nach Anspruch 1 oder 2, **dadurch gekennzeichnet, daß** die Zuluft (1) in die zweite Stufe vor ihrer Zuführung entstaubt wird und/oder daß ausschließlich der zweiten Stufe erwärmte von außen angesogene Frischluft (1) in der Menge zugeführt wird, wie der Abluft (4) aus der zweiten Stufe zur Belüftung der ersten Stufe abgezweigt wird, wobei die Luft durch die erste und/oder zweite Stufe als Druckluft eingeblasen wird und daß die Luft in der ersten und/oder zweiten Stufe von unten nach oben die Abfälle durchströmt.

4. Verfahren nach einem der Ansprüche 1 bis 3, **dadurch gekennzeichnet, daß** die Abfälle durch einen einzigen geschlossenen Raum kontinuierlich oder diskontinuierlich vorwärtsbewegt werden, in dessen ersten Teil die Abfälle mit von außen zugeführter Luft durchströmt und in dessen zweiten Teil von außen zugeführte Luft erwärmt und durch die kontinuierlich oder diskontinuierlich weiterbewegten Abfälle geführt wird, wobei vorzugsweise die erste Stufe über eine Zeit von 5 bis 15 Tagen, vorzugsweise 5 Tagen, und die zweite Stufe über eine Zeit von 4 bis 6 Tagen, vorzugsweise 5 Tagen, abläuft.

5. Verfahren nach einem der Ansprüche 1 bis 4, **dadurch gekennzeichnet, daß** die Luft für die zweite Stufe demselben Reservoir entnommen wird, vorzugsweise einer Halle, in der unbehandelte und/oder bereits getrocknete Abfälle und/oder einer Rotte unterzogene Abfälle lagern und/oder daß die der ersten und zweiten Stufe entnommene Luft, d.h. die Abluft, einem Biofilter und/oder einem Biowäscher zugeführt wird.

6. Verfahren nach einem der Ansprüche 1 bis 5, **dadurch gekennzeichnet, daß** der Luftdurchsatz durch die Abfälle in der ersten und/oder der zweiten Stufe in Abhängigkeit der Rottematerialtemperatur, der Rottefeuchtigkeit, des CO₂-Gehaltes in der jeweiligen Abluft gesteuert wird, wobei vorzugsweise die Dauer der ersten Stufe durch das zeitliche Temperaturprofil der Abfälle bestimmt wird, derart, daß die erste Stufe mindestens so lange durchgeführt wird wie die Abfall-(Rotte-)Temperatur einen Wert von bis zu 70°C nicht unterschreitet und maximal so lange, bis die Rottetemperatur auf Werte um 45°C abgesunken ist.

7. Vorrichtung zur Durchführung des Verfahrens nach einem der Ansprüche 1 bis 6, mit in unterschiedlichen miteinander verbundenen oder voneinander getrennten geschlossenen Räumen jeweils vorgesehenen Belüftungseinrichtungen und mit einer Abluftleitung des ersten Raumes (11), in der ein Wärmetauscher (20) angeordnet ist, der mit einer Wärmepumpe (21) verbunden ist, die mit einem Wärmetauscher (16) in der Zuluftleitung für den zweiten Raum in Verbindung steht, **dadurch gekennzeichnet, daß** mindestens ein Teil, vorzugsweise die gesamte Belüftungseinrichtung des ersten Raumes (11) mit der Abluftleitung des zweiten Raumes verbunden ist.

8. Vorrichtung nach Anspruch 7, **dadurch gekennzeichnet, daß** aus der Abluftleitung des zweiten Raumes (12) eine zweite Leitung abzweigt, die eine Entfeuchtungseinrichtung (19) aufweist und die mit den Belüftungseinrichtungen der zweiten Stufe oder deren Luftzufuhrsystem verbunden ist, wobei vorzugsweise durch eine Steuer- oder Regeleinrichtung in der Abluftleitung der zweiten Stufe (12), mittels der der Anteil der in der ersten Stufe (11) und/oder in der zweiten Stufe (12) geleiteten Teilluftmenge (5, 3) veränderbar ist und/oder die Belüftungseinrichtungen des ersten und/oder des zweiten Raumes (11, 12) aus einem unterhalb einer Sohle der zu einem Haufwerk aufgeschichteten Abfälle angeordneten Druckluftgebläse und einer oberhalb des Haufwerkes liegenden Luftabzugsleitung, ggf. mit einem Sauggebläse, bestehen.

9. Vorrichtung nach einem der Ansprüche 7 oder 8, **dadurch gekennzeichnet, daß** unterhalb der Sohle Sicken vorgesehen sind, in denen das Prozeßwasser aufgefangen und einem Sammelbehälter zugeleitet wird.

10. Vorrichtung nach einem der Ansprüche 7 bis 9, **dadurch gekennzeichnet, daß** in einer einzigen Halle, vorzugsweise einem Rottetunnel, Schubböden als Fördermittel für die Abfälle vorgesehen sind, mittels derer die Abfälle vom Eintritts- zum Austrittsende kontinuierlich oder diskontinuierlich bewegbar sind und daß die Halle bzw. der Rottetunnel die zwei miteinander verbundenen Räume bildet, wobei in dem ersten Teil das Rottematerial (die Abfälle) aerob behandelt und hierbei vorgetrocknet und in dem zweiten Teil die weitergeförderte Rotte mittels erwärmter Luft auf den Restfeuchtegehalt ≤15 Massen-% getrocknet wird und/oder die Abluftleitung des ersten Raumes in einen Biofilter und/oder Biowäscher mündet.

## Claims

1. Method for drying organic waste in two successive drying stages, whereby the waste is aerated in a first stage and thereby dehydrated in parts simultaneously, and the process heat resulting from the aeration-assisted aerobic decomposition is used in the second stage for residual drying,
**characterized in that**
the entire quantity of air (5) fed to the first stage is drawn from the exhaust air (4) of the second stage.

2. Method according to claim 1, **characterized in that** a part of the exhaust air (4) of the second stage is dehydrated and the dehydrated quantity of air (3) is conducted back to the drying stage, whereby preferably the part of the exhaust air (3) conducted back to the drying stage is up to 70 % in relation to the entire quantity of exhaust air (4) of the drying stage and/or the quantity of air (5) drawn from the exhaust air (4) of the drying stage is dehydrated before its conducting into the first stage.

3. Method according to claim 1 or 2, **characterized in that** the supply air (1) is set free from dust before conducted in the second stage and/or that fresh air (1) sucked up from the outside and heated is exclusively conducted into the second stage in a quantity as the exhaust air (4) from the second stage is drawn from the second stage to aerate the first stage, whereby the air is blown as pressure air through the first and/or the second stage and that the air in the first and/or in the second stage flows through the waste from the bottom to the top.

4. Method according to one of the claims 1 to 3, **characterized in that** the waste is moved forward continuously or discontinuously through a single closed room, in which first part air drawn from the outside flows through the waste and in which second part air drawn from the outside is heated and led through the waste moved forward continuously or discontinuously, whereby preferably the first stage runs over a time of 5 to 15 days, preferably 5 days, and the second stage runs over a time of 4 to 6 days, preferably 5 days.

5. Method according to one of claims 1 to 4, **characterized in that** the air for the second stage is drawn from the same reservoir, preferably a hall in which untreated and/or already dried waste and/or decomposting waste are stored and/or that the air withdrawn from the first or second stage, that is the exhaust air, is conducted to a bio-filter and/or a bio-washer.

6. Method according to one of the claims 1 to 5, **characterized in that** the quantity of air flow through the waste in the first and/or the second stage is controlled in dependence from the waste material temperature, the waste moisture, the CO₂-content in the respective exhaust air, whereby preferably the duration of the first stage is determined by the temporal temperature profile of the waste **in that** way, that the first stage runs at least so long as the waste-(rotting-) temperature does not fall short of a value up to 70°C and at the most so long as the rotting temperature drops below values of about 45°C.

7. Device for performance of the method according to one of the claims 1 to 6, with respectively provided aeration arrangements in different rooms connected one to the other and separated one from the other and closed and with an exhaust air conduct of the first room (11) in which a heat exchanger (20) connected with a heat pump (21) is arranged, the heat pump being connected to a heat exchanger (16) in the supply air conduct for the second room, **characterized in that** at least one part, preferably the entire aeration arrangement of the first room (11) is connected with the exhaust air conduct of the second room.

8. Device according to claim 7, **characterized in that** from the exhaust air conduct of the second room (12) a second conduct branches off having a dehydrating arrangement (19) and being connected with the aeration arrangement of the second stage or with its air supply system, whereby preferably the part of supplied air into the first stage (11) and/or the second stage (12) is variable by a regulating or a controlling arrangement in the exhaust air conduct of the second stage (12) and/or the aeration arrangement of the first and/or of the second room (11, 12) comprises a pressure air blower arranged below a ground of the waste piled up to a heap and an air exhausting conduct above the heap, optionally with a sucking blower.

9. Device according to one of the claims 7 or 8, **characterized in that** drainage means below the ground are provided, in which the process water is gathered and conducted to a collecting container.

10. Device according to one of the claims 7 to 9, **characterized in that** in one hall, preferably a retting tunnel, slide bar grounds are provided as conveyor means for the waste by which the waste can be moved continuously or discontinuously from the input to the output end and that the hall respectively the retting tunnel forms the two rooms connected together, whereby in the first part the retting material (the waste) are treated aerobically and hereby predried and in a second part the advanced retting material is dried to a residual moisture ≤ 15 mass% by means of heated air and/or the exhaust conduct of the first room lead to a bio-filter and/or bio-washer.

## Revendications

1. Procédé pour le séchage de déchets organiques qui sont soumis à deux étapes successives de séchage, les déchets étant aérés dans une première étape et, de cette manière, en même temps déshydratés partiellement, et la chaleur de processus produite lors de la décomposition aérobie soutenue par l'aération étant utilisée dans la deuxième étape pour le séchage résiduel,
**caractérisé par le fait**
**que** l'ensemble de la quantité d'air (5) amenée à la première étape est prise de l'air d'évacuation (4) de la deuxième étape.

2. Procédé selon la revendication 1, **caractérisé par le fait qu'**une partie de l'air d'évacuation (4) de la deuxième étape est soumise à une déshumidification et que cette quantité d'air déshumidifiée (3) est de nouveau amenée à l'étape de séchage, de préférence la part de l'air d'évacuation (3) qui est de nouveau amenée à l'étape de séchage allant jusqu'à 70 % par rapport à la quantité totale d'air d'évacuation (4) de l'étape de séchage et/ou la quantité d'air (5) prise de l'air d'évacuation (4) de l'étape de séchage étant déshumidifiée avant d'être amenée à la première étape.

3. Procédé selon la revendication 1 ou 2, **caractérisé par le fait que** l'air amené (1) dans la deuxième étape est dépoussiéré avant d'être amené et/ou que de l'air frais (1) chauffé aspiré de l'extérieur est amené exclusivement à la deuxième étape dans la mesure où de l'air d'évacuation (4) est prélevé de la deuxième étape pour l'aération de la première étape, l'air à travers la première et/ou la deuxième étape étant insufflé comme air comprimé et que l'air dans la première et/ou dans la deuxième étape traverse les déchets d'en bas vers le haut.

4. Procédé selon l'une des revendications 1 à 3, **caractérisé par le fait que** les déchets sont avancés de façon continue ou de façon discontinue à travers un seul espace clos dans la première partie duquel les déchets sont traversés d'air amené de l'extérieur et dans la deuxième partie duquel de l'air amené de l'extérieur est chauffé et est mené à travers les déchets déplacés de façon continue ou discontinue, de préférence la première étape se déroulant pendant une durée de 5 à 15 jours, de préférence de 5 jours et la deuxième étape se déroulant pendant une durée de 4 à 6 jours, de préférence de 5 jours.

5. Procédé selon l'une des revendications 1 à 4, **caractérisé par le fait que** l'air pour la deuxième étape est prélevé du même réservoir, de préférence d'un hall dans lequel sont stockés des déchets non traités et/ou déjà séchés et/ou des déchets soumis à une pourriture, et/ou que l'air prélevé de la première et de la deuxième étape, c'est-à-dire l'air d'évacuation, est amené à un biofiltre et/ou à un biolaveur.

6. Procédé selon l'une des revendications 1 à 5, **caractérisé par le fait que** le débit d'air à travers les déchets dans la première et/ou dans la deuxième étape est commandé en fonction de la température de la matière soumise à la pourriture, de l'humidité de la matière soumise à la pourriture, de la teneur en CO₂ dans l'air respectif d'évacuation, de préférence la durée de la première étape étant déterminée par le profil temporel de température des déchets, de telle façon que la première étape est effectuée du moins aussi longtemps que la température des déchets (matières soumises à la pourriture) ne sera pas inférieure à une valeur allant jusqu'à 70°C, et au maximum jusqu'au moment où la température de la matière soumise à la pourriture est passée à des valeurs d'environ 45°C.

7. Dispositif pour la mise en oeuvre du procédé selon l'une des revendications 1 à 6, avec des dispositifs d'aération prévus respectivement dans des espaces clos différents reliés entre eux ou séparés l'un de l'autre, et avec une conduite pour l'evacuation d'air du premier espace (11), dans laquelle est disposé un échangeur de chaleur (20) qui est relié à une pompe de chaleur (21) qui communique avec un échangeur de chaleur (16) dans la conduite pour l'amenée d'air pour le deuxième espace, **caractérisé par le fait que** du moins une partie, de préférence l'ensemble du dispositif d'aération du premier espace (11) est relié à la conduite pour l'évacuation d'air du deuxième espace.

8. Dispositif selon la revendication 7, **caractérisé par le fait que** de la conduite pour l'évacuation d'air du deuxième espace (12) est dérivée une deuxième conduite qui présente un dispositif de déshumidification (19) et qui est reliée aux dispositifs d'aération de la deuxième étape ou au système d'amenée d'air de celle-ci, de préférence un dispositif de commande ou de réglage étant prévu dans la conduite pour l'évacuation d'air de la deuxième étape (12), au moyen duquel la part de la quantité d'air partielle (5, 3) menée dans la première étape (11) et/ou dans la deuxième étape (12) peut être modifiée, et/ou les dispositifs d'aération du premier et/ou du deuxième espace (11, 12) se composant d'un soufflet à air comprirné qui est disposé au-dessous d'un fond des déchets empilés en tas, ainsi que d'une conduite pour l'évacuation d'air, le cas échéant avec un ventilateur aspirant, qui est située au-dessus dudit tas.

9. Dispositif selon l'une des revendications 7 ou 8, **caractérisé par le fait que** des rainures sont prévues au-dessous du fond, dans lesquelles l'eau de processus est capté et amené à un réservoir collecteur.

10. Dispositif selon l'une des revendications 7 à 9, **caractérisé par le fait que** l'on prévoit dans un seul hall, de préférence dans un tunnel de pourriture, des fonds à barres coulissantes en tant que moyens de transport pour les déchets, par l'intermédiaire desquels les déchets peuvent être déplacés de façon continue ou discontinue de l'extrémité d'entrée vers l'extrémité de sortie, et que le hall ou bien le tunnel de pourriture forme les deux espaces reliés entre eux, dans la première partie ayant lieu le traitement aérobie de la matière soumise à la pourriture (des déchets) et en même temps le préséchage et dans la deuxième partie ayant lieu le séchage de la matière avancée soumise à la pourriture, au moyen d'air chauffé, à la teneur en humidité résiduelle de ≤ 15 % en masse, et/ou que la conduite pour l'évacuation d'air du premier espace débouche dans un biofiltre et/ou dans un biolaveur.
